# EUROPEAN PATENT APPLICATION

(11) **EP 2 946 935 A1**
(43) Date of publication of application: **25.11.2015**
(21) Application number: 15168117.8
(22) Date of filing: 19.05.2015
(51) Int. Cl.: B41J 13/10, B41J 13/00

(54) **IMAGE FORMING APPARATUS AND METHOD FOR FORMING IMAGE**

(30) Priority: 19.05.2014 JP 2014103782; 13.04.2015 JP 2015081755
(71) Applicant: Funai Electric Co., Ltd., Daito Osaka (JP)
(72) Inventor: Kajihara, Kentaro, Daito-shi, Osaka (JP)
(74) Representative: Grünecker Patent- und Rechtsanwälte PartG mbB

(57) **Abstract**

An image forming apparatus comprising: an image forming unit that forms images on media based on image data; output trays that hold the media; and a controller that, based on the image data, decides the output trays as output trays to which the media are to be ejected.

## Description

### BACKGROUND

### (Technical Field)

An aspect of the present invention relates to an image forming apparatus or the like that allows efficient use of a plurality of output trays.

### (Related Art)

Conventionally known is an image forming apparatus (printer) configured to form (print) an image on a paper sheet serving as a recording medium by applying ink to the paper sheet, the apparatus including a plurality of paper output trays. Some of such image forming apparatuses including a plurality of paper output trays employs a method of, for example, using a different paper output tray for each job. JPH8-314647A discloses a printing method, and the like, configured such that document data is divided in accordance with pages and such that documents of different users are ejected to different trays.

The conventional image forming apparatus mentioned above, however, sometimes creates a situation where, when a paper output tray is full due to a large amount of printing executed by a certain user among a plurality of users sharing an image forming apparatus, another user cannot immediately execute printing. Although the image forming apparatus includes a plurality of paper output trays, a situation where all of the paper output trays are full can be caused. In such a situation, execution of printing may be impossible. This presents a major problem, particularly when printing with a high degree of importance and urgency is executed.

### SUMMARY

To solve the above-described problems, the present invention adopts the following means. The description given below contains the reference signs on the drawings being placed in parentheses, merely for facilitation of understanding of the invention and not for limiting elements of the present invention. The elements should be construed as widely as within the technical purview of those skilled in the art.

A first aspect of the present invention is an image forming apparatus (10) comprising:
an image forming unit (printing unit 110) that forms images on media based on image data;
output trays (output tray group 200) that hold the media; and
a controller (output tray controller 100) that, based on the image data, decides the output trays as output trays to which the media are to be ejected.

In the image forming apparatus having the above configuration, even when a user executes a large volume of image formation (printing), the image forming apparatus is able to restrict the number of output trays available for the user and therefore able to prevent printing executed by another user from being hindered. Accordingly, a latency imposed on other users can be shortened.

A second aspect of the present invention is the above image forming apparatus, wherein
the controller (output tray controller 100) divides the image data into jobs (S420), and assigns to each of the jobs an output tray to which the media are to be ejected (S430).

The image forming apparatus having the above configuration can provide an image forming apparatus that is able to assign output trays to each of the divided jobs. Also, an image forming apparatus can be provided that is able to, for example, determine output trays based on the type or attribute of the image data, or the like.

A third aspect of the present invention is the above image forming apparatus, wherein
when it is impossible to eject the media to the output trays, the image forming unit abandons image formation based on the image data (S440).

The image forming apparatus having the above configuration is able to prevent occurrence of a situation where, for example, image formation is continuously executed even though media on which images have been formed cannot be ejected to the output trays.

A fourth aspect of the present invention is the above image forming apparatus, wherein
upon abandoning image formation based on the image data, the image forming unit starts formation of images on the media based on another image data.

The image forming apparatus having the above configuration is able to abandon non-continuable image formation and execute image formation based on image data received next to the abandoned data, for example. This can provide an effect of, for example, preventing occurrence of a situation where a user who has inputted image data to the image forming apparatus after another user has to wait for a long time due to stagnation of image formation.

A fifth aspect of the present invention is the above image forming apparatus, wherein
each of the image data has a degree of priority set therefor, and
the controller (output tray controller 100) determines the number of output trays to which the media are to be ejected based on the degree of priority (S430).

In the image forming apparatus having the above configuration, the degree of priority can be set for each image data to be printed, and the number of output trays used can be adjusted in accordance with the degree of priority. In addition, for example, assigning more output trays to image data having a high degree of priority provides an effect of preventing occurrence of a situation where image formation based on image data having a high degree of priority is abandoned, and the like.

A sixth aspect of the present invention is the above image forming apparatus, wherein
the image forming unit (printing unit 110) changes an image-forming order based on the degree of priority.

The image forming apparatus having the above configuration is able to execute image formation of image data having a higher degree of priority prior to image formation of another image data having a low degree of priority. This can prevent occurrence of a situation where a start of image formation of image data having a high degree of priority is suspended for a long time as a sacrifice for image data having a low degree of priority. Accordingly, occurrence of a situation can be prevented where, for example, media on which images are formed based on image data having a high degree of priority are left uncollected in the image forming apparatus for a long time. In a configuration in which more output trays are assigned to image data having a higher degree of priority, image formation based on such image data is preferentially executed, which provides, for example, avoidance of a situation where many output trays are not usable as output trays of other image data.

A seventh aspect of the present invention is the above image forming apparatus, wherein
the output trays (output tray group 200) include a special output tray (220) that allows only a specified user to take out the media therefrom.

The image forming apparatus having the above configuration provides an effect of, for example, avoiding the risk that a third party will view a document w a high confidentiality. Accordingly, the image forming apparatus having an enhanced security function can be provided.

An eighth aspect of the present invention is the above image forming apparatus, wherein
the special output tray (220) allows a user who has inputted the image data to take out the media therefrom.

The image forming apparatus having the above configuration allows only a user who has inputted image data to take out media on which images are formed based on the image data. Accordingly, further enhancement of the security function is achieved.

A ninth aspect of the present invention is the above image forming apparatus, wherein
the special output tray (220) allows a user who has inputted the image data and a preset administrator user to take out the media therefrom.

The image forming apparatus having the above configuration allows the user who has inputted image data and the administrator user to take out media having images formed thereon. This can prevent occurrence of a situation where media on which images have been formed are left uncollected in the special output tray (220) for a long time. In particular, the administrator user is allowed to take out the media, and therefore occurrence of a situation can be prevented where the media are left uncollected even when the user who has inputted image data cannot take out the media.

A tenth aspect of the present invention is the above image forming apparatus, wherein
based on an authentication performed by the specified user, the special output tray (220) allows the media to be taken out therefrom.

The image forming apparatus having the above configuration can provide a function of allowing media to be taken out only when an authentication based on a password, a secret code, an IC card, a communication terminal, a fingerprint, or the like, is successful. This leads to further enhancement of the security, improvement of user-friendliness, and the like.

An eleventh aspect of the present invention is the above image forming apparatus, further comprising a notifying unit (120) that notifies the specified user upon elapse of a predetermined time period after the media are ejected to the special output tray (220).

The image forming apparatus having the above configuration is able to suppress occurrence of a situation where media on which printing is completed are left uncollected in the special output tray (220) for a long time, with enhancement of the security function. In particular, the special output tray is accessible (media therein can be taken out) only by the specified user, and therefore occupancy by the specified user may occur. The above configuration, however, can prevent such occupancy of the special output tray.

A twelfth aspect of the present invention is the above image forming apparatus, wherein
the notifying unit notifies the specified user at a frequency that is determined based on the number of the special output trays to which the media are ejected.

The image forming apparatus having the above configuration is able to, for example, frequently give notification (or alarm) to a user who occupies many special output trays. This can prevent occurrence of a situation where many special output trays remain occupied by a specified user.

A thirteenth aspect of the present invention is the image forming apparatus, wherein
the controller dynamically changes the number of output trays to which the media are to be ejected.

The image forming apparatus having the above configuration dynamically changes the number of output trays, thereby enabling an appropriate number of output trays to be assigned in a case-by-case fashion irrespective of the condition at the time of assignment of output trays. This can, for example, prevent occurrence of a situation where merely a relatively small number of output trays are assigned to image data having a high degree of priority because of the situation at the time of assignment of output trays.

Another aspect of the present invention is a method for forming an image, comprising:
a first step (S430) of determining the number of output trays to which media are to be ejected based on image data;
a second step (S450) of forming images on the media based on the image data; and
a third step (S450) of discharging the media to the output trays determined in the first step.

In the method for forming an image having the above configuration, even when a user executes a large volume of image formation (printing), the number of output trays available for the user can be restricted, and therefore hindrance to printing executed by another user can be prevented.

### BRIEF DECRIPTION OF THE DRAWINGS

Fig. 1 shows an exemplary configuration of a printer system according to an embodiment 1;
Fig. 2 is a flowchart depicting a specific example of a printing process according to the embodiment 1;
Fig. 3 shows a relationship between the degree of priority and an output tray assigned;
Fig. 4 shows a specific example of assignment of output trays;
Fig. 5 shows a specific example of assignment of output trays;
Fig. 6 shows a specific example of assignment of output trays;
Fig. 7 shows a specific example of assignment of output trays;
Fig. 8 is a flowchart depicting a specific example of a printing process according to a variation;
Fig. 9 shows an exemplary configuration of a printer system according to an embodiment 2;
Fig. 10 is a flowchart depicting a specific example of a printing process according to an embodiment 3;
Fig. 11 shows a specific example of interchange of a printing order;
Fig. 12 shows a specific example of interchange of the printing order;
Fig. 13 shows a specific example of interchange of the printing order;
Fig. 14 is a flowchart depicting a specific example of a printing process according to an embodiment 4;
Fig. 15 shows a specific example of interchange of the printing order and modification of the number of output trays;
Fig. 16 shows a specific example of interchange of the printing order and modification of the number of output trays;
Fig. 17 shows a specific example of interchange of the printing order and modification of the number of output trays.

### DECRIPTION OF EXEMPLARY EMBODIMENTS

With reference to the drawings, a specific description of some embodiments of the present invention will be given based on the following configurations. It should be noted that the embodiments described below are merely illustrative examples of the present invention and not to be construed as limiting the technical scope of the present invention. In the drawings, the same elements are denoted by the same reference signs, and repetitive descriptions may be omitted.

### 1. Embodiment 1

(1) Exemplary Configuration of Printer System Including Image Forming Apparatus
(2) Specific Example of Printing Process
(3) Variation

### 2. Embodiment 2

### 3. Embodiment 3

### 4. Embodiment 4

### 5. Supplementary Remarks

### (1. Embodiment 1)

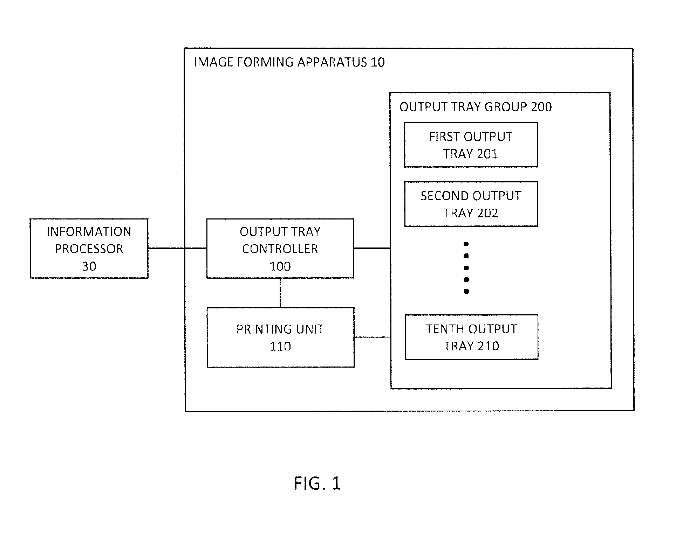

First, an embodiment 1 of the present invention will be described with reference to Figs. 1 to 8. A feature of an image forming apparatus (printer) of this embodiment is that the number of output trays (also called paper output trays) to be used is determined based on the degree of priority of image data. A specific description is as follows.

### ((1) Exemplary Configuration of Printer System Including Image Forming Apparatus)

Fig. 1 shows an exemplary configuration of a printer system including an image forming apparatus (printer) according to this embodiment. As shown in Fig. 1, an image forming apparatus 10 of this embodiment includes an output tray controller 100, a printing unit 110, and an output tray group 200. The image forming apparatus 10 is connected to an information processor 30. The image forming apparatus 10 forms, on a recording medium such as paper, an image of image data that a user has outputted to the image forming apparatus 10 through the information processor 30.

### (Output Tray Controller 100)

The output tray controller 100 divides the image data that the user has inputted through the information processor 30 into a plurality of jobs, and, for each of the divided jobs, determines to which output tray a recording medium having a corresponding image formed (printed) thereon is to be ejected. At this time, the output tray controller 100 divides the received image data into jobs each corresponding to a predetermined number of pages (for example, 100 pages), and determines an output tray to which a recording medium having an image corresponding to each job formed thereon is to be ejected. When the volume of the image data is less than the predetermined number of pages (for example, 100 pages), recording media on which images are formed based on this image data are ejected to a single output tray.

A degree of priority is set for each of the image data inputted by the user. In accordance with the degree of priority, the output tray controller 100 determines the number of output trays to which recording media having images formed thereon are to be ejected. The output tray controller 100 receives image data inputted, and outputs the data to the printing unit 110.

The output tray controller 100 controls the whole of the image forming apparatus 10. More specifically, the output tray controller 100 executes a process of storing image data, changing a printing order, and the like.

A specific example of a printing process including the determination of output trays performed by the output tray controller 100 will be given later.

### (Printing Unit 110)

The printing unit 110 forms (prints), on a recording medium such as a paper sheet, an image (containing characters, symbols, etc.) based on image data received via the output tray controller 100. Elements that are generally provided in an image forming apparatus (printer) are provided in the printing unit 110. That is, for example, in a case where the image forming apparatus 10 is an ink-jet printer, the printing unit 110 includes a transfer roller that transfers a recording medium, a printing head that includes nozzles for ejecting ink to the recording medium and that moves in a main scanning direction and a sub scanning direction, and the like. The image forming apparatus 10 is not limited to ink-jet printers, and it may be a laser printer or the like.

### (Output Tray Group 200)

The output tray group 200 includes ten output trays, namely, a first output tray 201 to a tenth output tray 210. A recording medium on which an image is formed by the printing unit 110 is ejected to each of the output trays 201 to 210 of the output tray group 200. The recording medium having the image formed thereon is ejected to any of the output trays 201 to 210 determined by the output tray controller 100 as described above. Each of the output trays 201 to 210 holds the recording medium.

### (Information Processor 30)

The information processor 30 is, for example, a PC operable by the user. Based on the operation by the user, the information processor 30 outputs image data and information indicating the degree of priority of the image data, to the image forming apparatus 10.

### ((2) Specific Example of Printing Process)

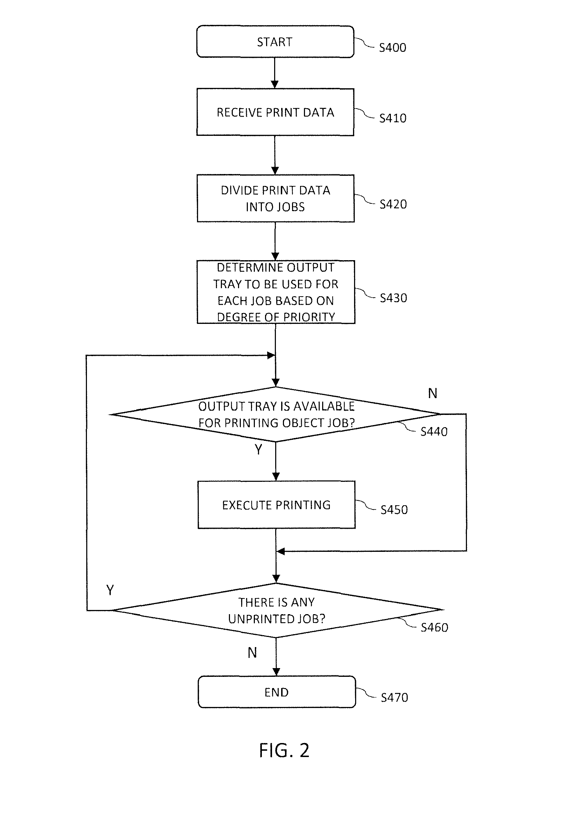

Next, a specific example of a printing process will be described with reference to Fig. 2. Fig. 2 is a flowchart depicting a printing process performed in the image forming apparatus of this embodiment.

### (S400 to S410)

First, printing is started based on an instruction from the user (S400). Then, image data and information indicating the degree of priority associated with the image data (the image data and the information indicating the degree of priority will be collectively called print data) are outputted from the information processor 30 to the output tray controller 100 of the image forming apparatus 10. Not only data of an image to be formed on a recording medium but also print-setting information about scale setting and the like may be contained in the image data. The degree of priority is determined selectively from a plurality of degrees of priority, and this determination is made by the user or made automatically in accordance with the type of the image data, which will be described later.

### (S420)

Then, the output tray controller 100 divides the image data inputted by the user into jobs (S420). More specifically, the output tray controller 100 checks the number of pages included in the received image data, and divides the image data into jobs each corresponding to a predetermined number of pages. In an exemplary setting, each job is generated for 100 pages of image data. When image data has 300 pages, the image data is divided into three jobs each corresponding to 100 pages. The unit of dividing into jobs and the method of dividing are not limited to the ones illustrated above, and setting of them may be optional.

### (S430)

Then, based on the degree of priority, the output tray controller 100 determines output trays to be used (assigned) for each of the divided jobs. To be specific, the percentage of output trays available for image data is fixed based on the degree of priority of the image data. In assignment of output trays, the number of output trays is determined based on the percentage from the output trays that are not assigned to another image data.

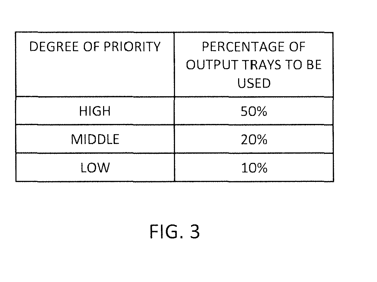

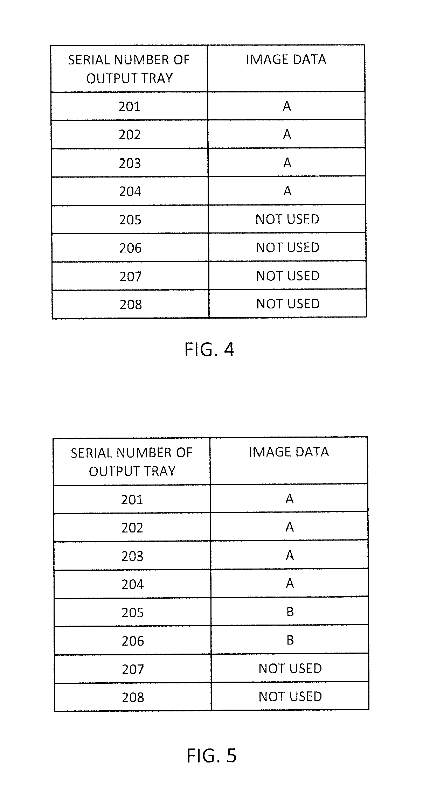

Fig. 3 shows an example of the relationship between the degree of priority and the percentage of output trays used. Figs. 4 to 7 show a specific example of assignment of output trays. Referring to Fig. 3, in an example, three degrees of priority of high, middle, and low are set, and the percentages of output trays used for the three degrees are 50%, 20%, and 10%, respectively. The image forming apparatus 10 includes ten output trays in total. To avoid a situation where all the output trays are used, it is ensured without fail that two output trays (for example, the ninth output tray 209 and the tenth output tray 210) corresponding to the remaining 20% are kept free. Therefore, predetermined image data is assigned to any of eight output trays.

In the determination of output trays, if the image forming apparatus receives image data (A) having a "high" degree of priority under a state where there are eight output trays not assigned (determined) as output trays of another image data; the output tray controller 100 newly assigns (determines) four output trays, which correspond to 50% of the eight output trays, as output trays used for the image data (A). The output tray controller 100 selects and assigns the four output trays in ascending order from the first to tenth output trays 201 to 210. In other words, if none of the output trays is assigned as an output tray of any image data, the output tray controller 100 assigns four output trays in total, namely, the first to fourth output trays 201 to 204, as output trays of the image data (A) (see Fig. 4). If, for example, the first output tray 201 and the third output tray 203 have been already assigned as output trays of another image data, four output trays in total, namely, the second output tray 202 and the fourth to sixth output trays 204 to 206 can be assigned as output trays of the image data. If the number of jobs into which image data is divided is less than four; necessary output trays, the number of which is less than four, are assigned as output trays serving to receive eject of the image data. If the number of jobs into which image data is divided is equal to or more than five, one output tray is assigned as an output tray serving to receive eject of recording media on which images in a plurality of jobs are formed. In such a case where one output tray is assigned as an output tray serving to receive recording media on which images in a plurality of jobs are formed; a process of forming images on recording media in any job is stopped until the user takes out recording media on which images have been formed in the previous job.

If the image forming apparatus receives image data (B) having a "high" degree of priority under the above-described state where the four output trays are assigned as output trays of the image data (A); the output tray controller 100 assigns two output trays, which correspond to 50% of the four output trays not assigned as output trays of another image data, as output trays of the image data (B). That is, the output tray controller 100 assigns two output trays in total, namely, the fifth output tray 205 and the sixth output tray 206, as output trays of the image data (B) (see Fig. 5).

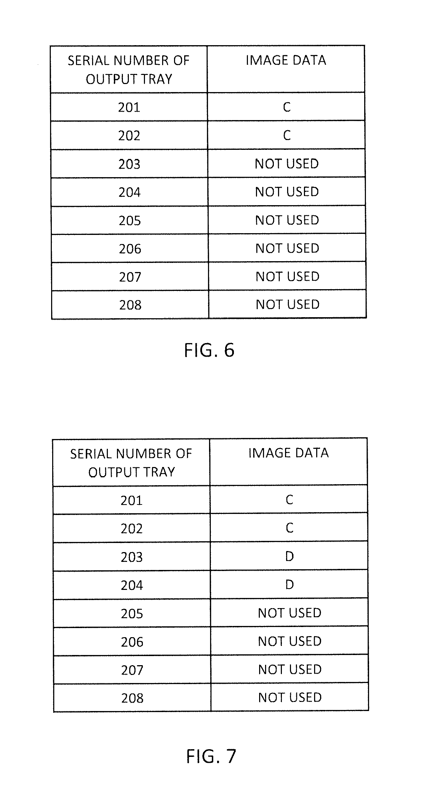

Here, a specific example case where the image forming apparatus receives image data (C) and image data (D) having "middle" degree of priority will be described as another example of the determination of the number of output trays. If the image forming apparatus receives the image data (C) so that the output tray controller 100 assigns output trays under a state where there are eight output trays not assigned as output trays of another image data; the output tray controller 100 assigns two output trays, which correspond to 20% (rounded-up) of the eight output trays, as output trays of the image data (C) (see Fig. 6). Then, if the image forming apparatus receives the image data (D) also having "middle" degree of priority; the output tray controller 100 assigns two output trays, which correspond to 20% (rounded up) of six output trays that are currently free, as output trays of the image data (D) (see Fig. 7). In this manner, the output tray controller 100 rounds up the value such that at least one output tray is assigned, when determining the number of output trays in accordance with the predetermined percentage.

Here, some of the output trays may be set as an excluded output tray. The excluded output tray is a tray that is not assigned (determined) as an output tray serving to receive recording media having images formed thereon irrespective of the degree of priority. In such a case, only when all of the output trays except the excluded output tray have been assigned as output trays of image data, the excluded output tray is allowed to be determined as an output tray of image data.

### (S440 to S450)

After an output tray to be used for each of the divided jobs is assigned in the above-described process (S430), whether or not the output tray assigned to a printing object job for which printing is to be executed is available is checked (S440). If the output tray is available (S440:Y), the printing unit 110 executes formation of images on recording media, and ejects the recording media to the determined output tray (S450).

### (S460)

If the output tray determined to be used for a printing object job for which printing is to be executed is not available (S440:N) or after recording media having images formed thereon are ejected to the output tray (S450); whether or not there is any other job (divided jobs) for which image formation (printing) is not yet executed is checked (S460).

### (S470)

If, as a result of the above process, there is no other job for which printing is not yet executed (S460:N); the printing process ends (S470). If there is any job for which printing is not yet executed (S460:Y); the process returns to S440, to execute image formation according to the job for which printing is not yet executed (S440 and subsequent processing).

In the image forming apparatus having the configuration of this embodiment described above, the number of output trays to which recording media having images formed thereon are to be ejected can be determined based on received image data. Therefore, even when a user executes a large volume of image formation (printing), the image forming apparatus is able to restrict the number of output trays available for the user. This can prevent occurrence of a situation where a user who executes a large volume of image formation hinders printing executed by other users. Accordingly, a latency imposed on other users can be shortened.

In the image forming apparatus having the configuration of this embodiment described above, the output tray controller 100 divides image data into a plurality of jobs (S420), and determines output trays serving to receive ejection of recording media on which images corresponding to each of the jobs are formed (S430). This enables the image forming apparatus to assign output trays to each of the divided jobs. This also enables the image forming apparatus to determine output trays based on, for example, the degree of priority that depends on the type or attribute of the image data.

In the image forming apparatus having the configuration of this embodiment described above, the degree of priority is set for each image data, and based on the degree of priority, the output tray controller 100 determines the number of output trays to which recording media having images formed thereon are to be ejected (S430). In the image forming apparatus, therefore, the degree of priority can be set for each image data to be printed, and the number of output trays used can be adjusted in accordance with the degree of priority. In addition, for example, assigning more output trays to image data having a high degree of priority provides an effect of preventing occurrence of a situation where image formation based on image data having a high degree of priority is abandoned, and the like.

### ((3) Variation)

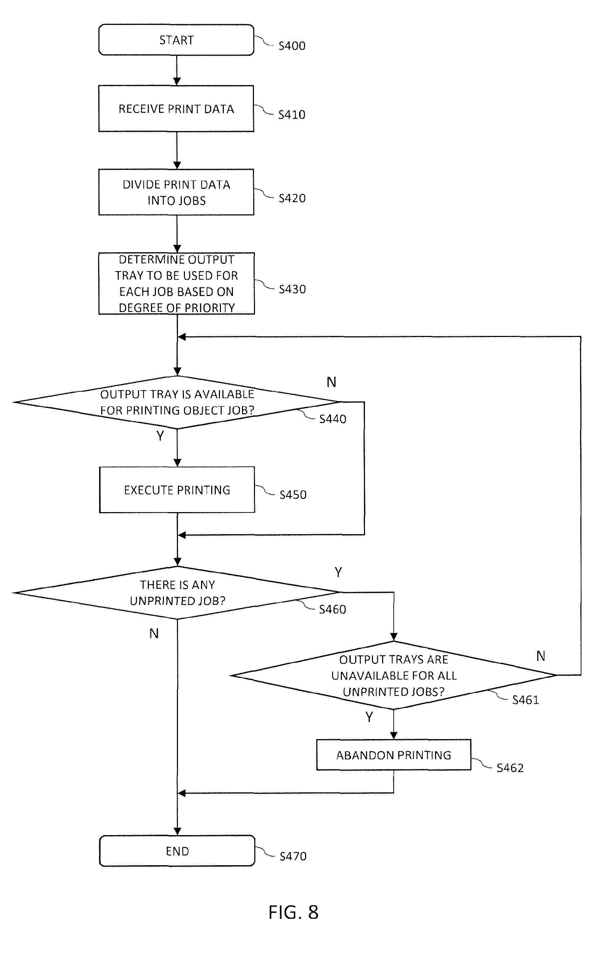

A variation of the embodiment 1 will be described. This variation additionally includes a process of abandoning image formation if no output tray is free for receiving ejection of recording media on which images have been formed. In the following, a specific description will be given with reference to Fig. 8.

### (S461 to S462)

Even when, in the process of S460, there remains other jobs (divided jobs) for which image formation (printing) is not yet executed (S460:Y); the printing unit 110 can abandon image formation (printing) of these jobs (S462) if the output trays are unavailable for all of these jobs (S461:Y). On the other hand, if there remains other jobs (divided jobs) for which image formation (printing) is not yet executed and there is an output tray available for any of the jobs (S461:N); the printing unit 110 executes image formation with use of the output tray corresponding to the job (S440 to S450).

In this process, upon abandoning image formation of a job for which image formation is not yet executed, the printing unit 110 executes, for example, image formation based on another image data that is received after the image data corresponding to the abandoned job and that is currently awaiting image formation (awaiting printing). At this time, the job for which the image form is abandoned is re-executed after the execution of the image formation based on said another image data is completed.

The image forming apparatus having the configuration of this variation described above makes it possible that, if recording media having images based on a job formed thereon cannot be ejected to output trays, image formation based on image data corresponding to this job is abandoned. Accordingly, the image forming apparatus is able to prevent occurrence of a situation where image formation is continuously executed even though recording media on which images have been formed based on a job cannot be ejected to output trays.

The image forming apparatus having the configuration of this variation described above also makes it possible that, if image formation based on image data corresponding to a job is abandoned, image formation based on another image data is started. Thus, non-continuable image formation can be abandoned, and, for example, image formation based on image data received next to the abandoned data can be executed. Accordingly, the image forming apparatus is able to, for example, prevent occurrence of a situation where a user who has inputted image data to the image forming apparatus after another user has to wait for a long time due to stagnation of image formation.

### (2. Embodiment 2)

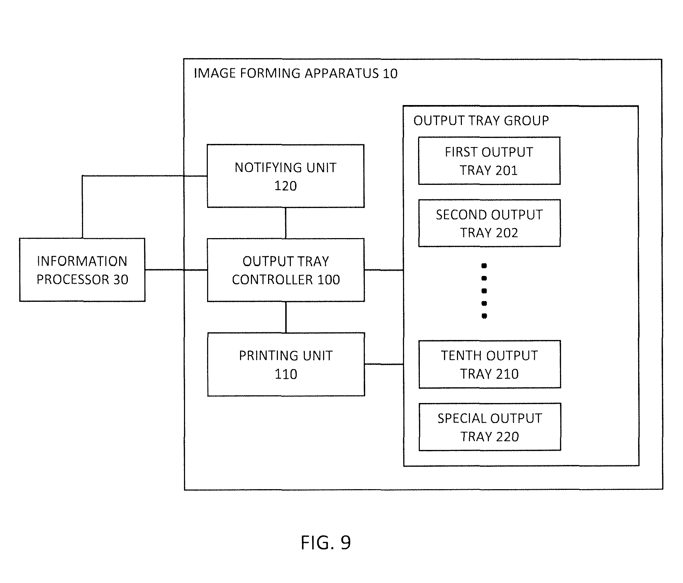

Next, an embodiment 2 of the present invention will be described with reference to Fig. 9. This embodiment is different from the embodiment 1 in that the image forming apparatus 10 includes a notifying unit 120 and that the output tray group 200 includes a special output tray 220. In the following, a specific description will be given mainly of the differences from the embodiment 1, and configurations and functions similar to those of the embodiment 1 are not described.

### (Special Output Tray 220)

The output tray group 200 of this embodiment includes a special output tray 220 in addition to the ten output trays of the first to tenth output trays 201 to 210. The special output tray 220 is lockable with a key such that only a specified user is allowed to take out recording media having images formed thereon that are ejected to and held in the special output tray 220. The specified user herein means a user who has inputted to the image forming apparatus 10 image data corresponding to recording media to be ejected in the special output tray. The key of the special output tray 220 can be unlocked with an IC card possessed by each user of the image forming apparatus 10 via neighboring wireless communication. The key is not limited to an IC card, but it may be a physical key, a personal identification number, or a password. In a conceivable configuration, the key may be unlocked upon authentication using a communication terminal such as a smartphone or upon biometric authentication using a fingerprint or the like.

In a further conceivable configuration, not only the user who has inputted image data corresponding to recording media to be ejected to the special output tray 220 but also a user (also called an administrator user) who is preliminarily given an administrator privilege may be allowed to unlock the key of the special output tray 220.

In this embodiment, the user outputs, from the information processor 30 to the image forming apparatus 10, not only the image data as well as the degree of priority but also classification information indicating whether or not the data is a confidential document. The output tray controller 100 performs such a control as to cause the confidential document to be ejected only to the special output tray 220 among the output tray group 200.

### (Notifying unit 120)

Each time a predetermined time period (for example, five minutes) elapses after recording media having images formed thereon are ejected to the special output tray 220, the notifying unit 120 notifies the user who has inputted image data corresponding to the recording media and the user who has the administrator privilege that image formation is completed. At this time, the notifying unit 120 outputs notification data so as to cause notification of the completion of image formation to be displayed on a screen of the information processor 30 used by the user who has inputted the image data corresponding to the recording media and used by the user who has the administrator privilege.

The more the number of output trays to which recording media having images formed thereon are ejected is, the more frequently the notifying unit 120 notifies the user who has inputted image data corresponding to the recording media and the user who has the administrator privilege that image formation is completed. Taking a case as a more specific example, the notifying unit 120 notifies the users every four minutes when recording media are ejected to two output trays, and notifies the users every three minutes when recording media are ejected to three output trays.

The image forming apparatus having the configuration of this embodiment described above includes the special output tray 220 that allows only a specified user to take out recording media having images formed thereon from the special output tray 220. Therefore, the image forming apparatus is able to avoid the risk that a third party will view a document with a high confidentiality. Accordingly, the image forming apparatus having an enhanced security function can be provided.

The image forming apparatus having the configuration of this embodiment described above may allow only the user who has inputted image data to take out recording media on which images based on the image data are formed. This can further enhance the security function of the image forming apparatus.

The image forming apparatus having the configuration of this embodiment described above may allow not only the user who has inputted image data but also the administrator user to take out the recording media. This can prevent occurrence of a situation where recording media on which images have been formed are left uncollected in the special output tray 220 for a long time. In particular, the administrator user is allowed to take out the recording media, which can prevent occurrence of a situation where the recording media are left uncollected even when the user who has inputted image data cannot take out the recording media.

The image forming apparatus having the configuration of this embodiment described above may allow only a specified user who has been successfully authenticated to take out the recording media. Such an image forming apparatus can provide a function of allowing recording media to be taken out only when an authentication based on a password, a secret code, an IC card, a communication terminal, a fingerprint, or the like, is successful. This leads to further enhancement of the security, improvement of user-friendliness, and the like, of the image forming apparatus.

The image forming apparatus having the configuration of this embodiment described above includes the notifying unit 120 that notifies the above-mentioned specified user upon elapse of a predetermined time period (for example, five minutes) after recording media having images formed thereon are ejected to the special output tray 220. Accordingly, the image forming apparatus is able to suppress occurrence of a situation where recording media on which printing is completed are left uncollected in the special output tray 220 for a long time, with enhancement of the security function. In particular, the special output tray 220 is accessible (recording media therein can be taken out) only by the specified user, and therefore occupancy by the specified user may occur. The above configuration, however, can prevent such occupancy of the special output tray.

In the image forming apparatus having the configuration of this embodiment described above, the notifying unit 120 gives the notification at a frequency that is determined based on the number of special output trays to which recording media are ejected. Accordingly, the image forming apparatus is able to, for example, frequently give notification (or alarm) to a user who occupies many special output trays. This can prevent occurrence of a situation where many special output trays remain occupied by a specified user.

### (3. Embodiment 3)

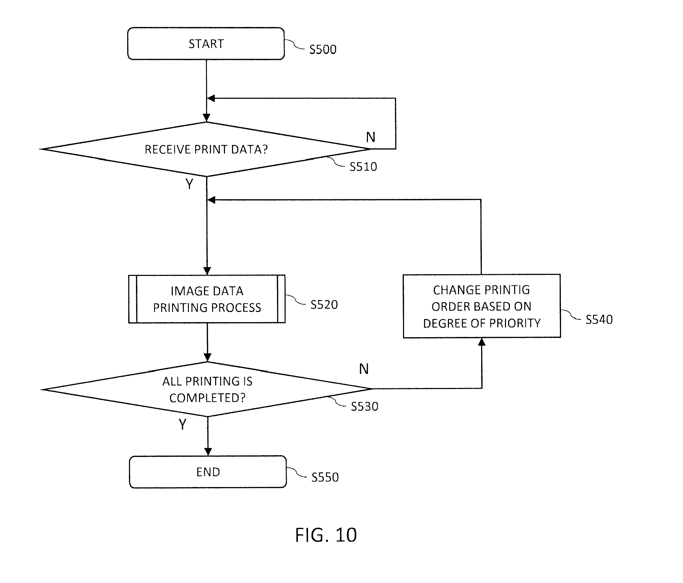

Next, an embodiment 3 of the present invention will be described with reference to Figs. 10 to 13. This embodiment is characterized in that the order of printing (image formation) is changed based on the degree of priority associated with image data in a process that is executed before or after the printing process of the embodiment 1. In the following, a specific description will be given but the same description as that of the embodiment 1 will be omitted.

Fig. 10 is a flowchart depicting a specific example of a printing process according to this embodiment. In this process, an image data printing process (S520) corresponds to the process depicted by the flowchart of Fig. 2.

### (S500 to S510)

In the printing process, the output tray controller 100 waits for image data (print data) that the user inputs from the information processor 30 to the image forming apparatus 10. If the image forming apparatus 10 receives image data (S510:Y), the output tray controller 100 executes the image data printing process (see Fig. 2) (S520).

### (S530, S550)

Upon completion of printing of one image data (completion of S520), the output tray controller 100 checks whether or not printing of all image data received by the image forming apparatus 10 is completed so that no image data is left unprinted (S530). If printing of all image data received by the image forming apparatus 10 is completed (S530:N), the output tray controller 100 ends the printing process (S550).

### (S540)

If printing of all image data received by the image forming apparatus 10 is not completed and there is unprinted image data (S530:N), the output tray controller 100 executes a process of changing (adjusting) the printing order based on the degree of priority (S540). To be more specific, the output tray controller 100 changes the printing order so as to preferentially execute printing of image data having a higher degree of priority (S540), and then executes the image data printing process (S520).

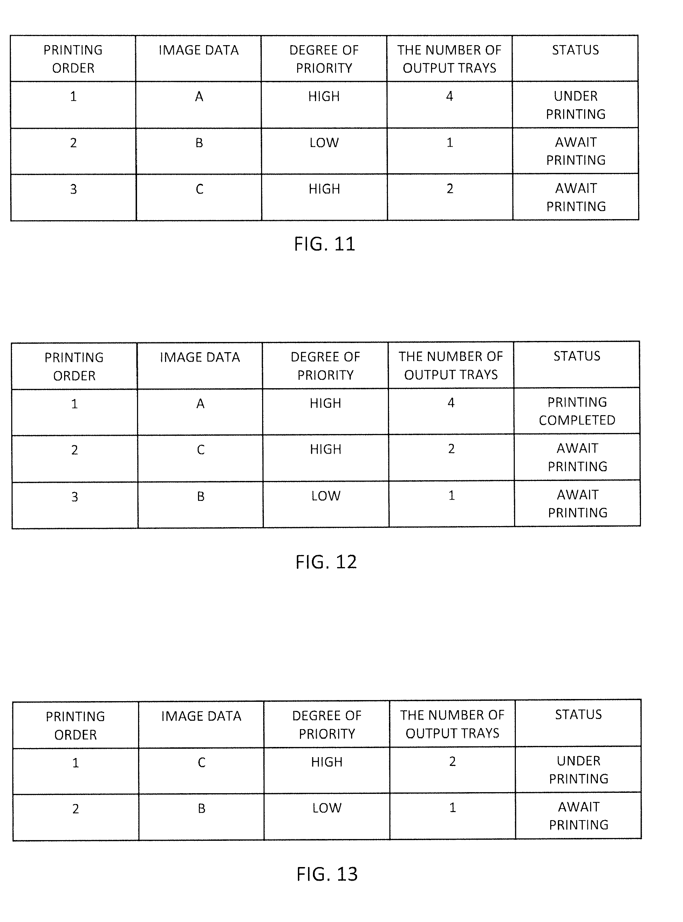

Here, the change of the printing order performed by the output tray controller 100 will be described with reference to Figs. 11 to 13.

Fig. 11 shows a state of image data under the condition that image data (A), image data (B), and image data (C) are received by the image forming apparatus 10 in the mentioned order and printing of the image data (A) that is firstly received is in execution. Here, it is assumed that: the image data (A) has a "high" degree of priority and has four output trays assigned; the image data (B) has a "low" degree of priority and has one output tray assigned; and the image data (C) has a "high" degree of priority and has two output trays assigned.

In this condition, upon completion of printing of the image data (A), the output tray controller 100 compares the degrees of priority of the image data (B) and the image data (C) whose printing orders are second and third, respectively. The image data (C) whose printing order is third has a higher degree of priority than the image data (B) whose printing order is second. Therefore, the output tray controller 100 executes a process of raising the printing order of the print data (C). After the output tray controller 100 changes the printing order in this manner, the image data is in a state as shown in Fig. 12.

Fig. 13 shows a state of the image data after the image data (A) that has been printed is deleted by the output tray controller 100. Printing of the image data (C) whose printing order is raised is executed prior to the image data (B).

The image forming apparatus having the configuration of this embodiment described above is able to change the image-forming order based on the degree of priority set for image data. Accordingly, the image forming apparatus is able to execute image formation of image data having a higher degree of priority prior to image formation of another image data having a low degree of priority. Moreover, occurrence of a situation can be prevented where a start of image formation of image data having a high degree of priority is suspended for a long time as a sacrifice for image data having a low degree of priority. Accordingly, occurrence of a situation can be prevented where, for example, recording media on which images are formed based on image data having a high degree of priority are left uncollected in the image forming apparatus for a long time.

A timing when the printing order is changed in the image forming apparatus is not limited to the one illustrated in this embodiment, and the change can be performed at various timings. For example, the printing order can be changed at a timing when new image data is received by the image forming apparatus.

### (4. Embodiment 4)

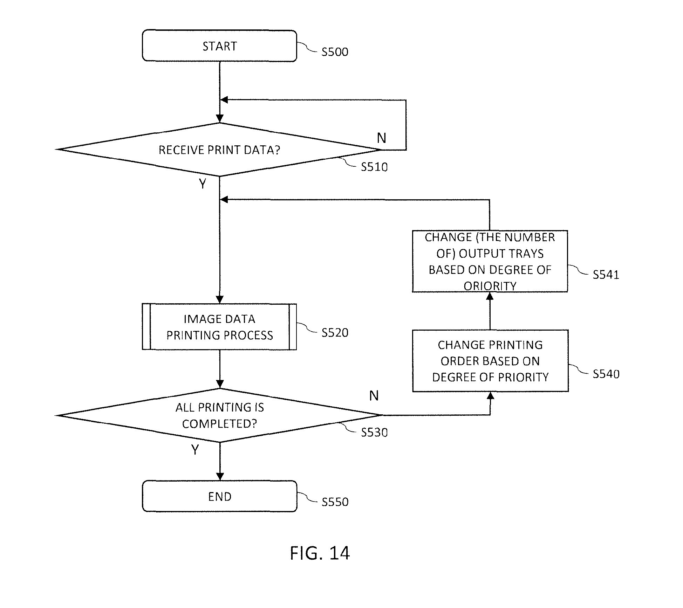

Next, an embodiment 4 of the present invention will be described with reference to Figs. 14 to 17. This embodiment is characterized in that a process of dynamically changing the number of output trays assigned to each image data is provided in addition to the process of changing the printing order described in the embodiment 3. In the following, a specific description will be given but the same description as that of the embodiment 1 or 3 will be omitted.

Fig. 14 is a flowchart depicting a specific example of a printing process according to this embodiment. In this process, similarly to the embodiment 3, an image data printing process (S520) corresponds to the process depicted by the flowchart of Fig. 2.

### (S541)

If, when the image data printing process (S520) ends, printing of all image data received by the image forming apparatus 10 is not completed and there is unprinted image data (S530:N); the process of S540 is executed and then a process (S541) of changing the (number of) output trays based on the degree of priority is executed. More specifically, the output tray controller 100 re-determines the number of output trays to be used for each image data based on the degree of priority of the image data that is currently unprinted. A specific example thereof will be described below.

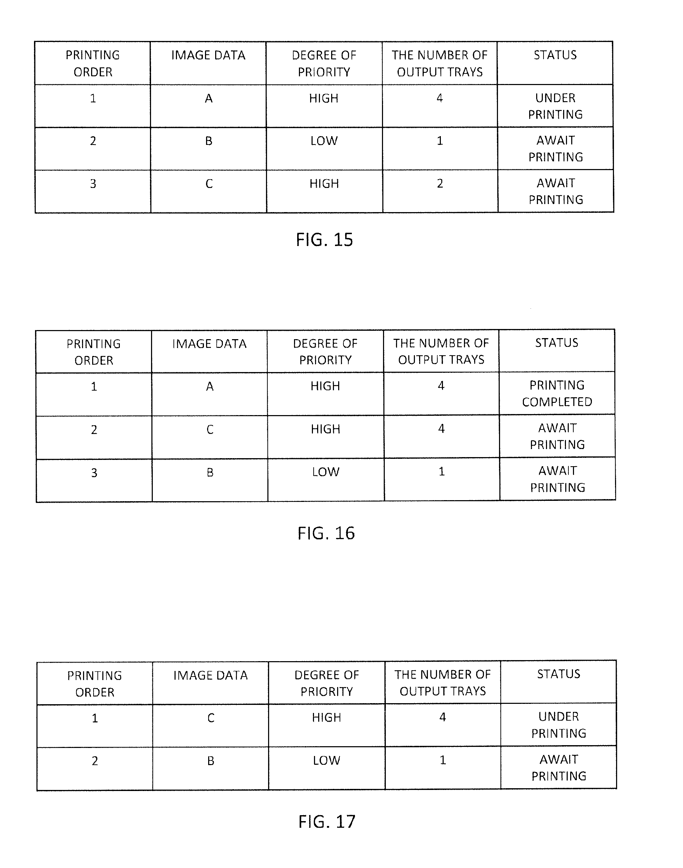

Fig. 15 shows a state of image data under the condition that image data (A), image data (B), and image data (C) are received by the image forming apparatus 10 in the mentioned order and printing of the image data (A) that is firstly received is in execution. Here, it is assumed that: there are eight trays in total; the image data (A) has a "high" degree of priority and has four output trays assigned; the image data (B) has a "low" degree of priority and has one output tray assigned; and the image data (C) has a "high" degree of priority and has two output trays assigned.

In this condition, upon completion of printing of the image data (A), the output tray controller 100 re-determines the numbers of output trays assigned to the image data (B) and the image data (C) whose printing orders are second and third, respectively, based on the degree of priority. At this time, similarly to the embodiment 3, the output tray controller 100 executes a process of raising the printing order of the print data (C). In addition, the output tray controller 100 re-determines the number of output trays assigned to the print data (C). At this point of time, the number of output trays used for image data other than the print data (C) (which means the number of output trays used for the image data (B)) is one. Thus, the number of remaining output trays is seven. The output tray controller 100 executes a process of assigning 50% of the seven output trays to image data having a "high" degree of priority. As a result, the number of output trays used for the image data (C) is changed into four. After the output tray controller 100 changes the printing order and the number of output trays in this manner, the image data is in a state as shown in Fig. 16.

Fig. 17 shows a state of the image data after the image data (A) that has been printed is deleted by the output tray controller 100. The printing order of the image data (C) is raised, and the number of output trays assigned thereto is changed from two into four.

The image forming apparatus having the configuration of this embodiment described above dynamically changes the number of output trays serving to receive ejection of recording media on which images are formed based on image data. In the image forming apparatus, therefore, an appropriate number of output trays can be assigned in a case-by-case fashion irrespective of the condition at the time of assignment of output trays (for example, at the time of reception of image data). This can prevent occurrence of a situation where, for example, merely a relatively small number of output trays are assigned to image data having a high degree of priority because of the situation at the time of assignment of output trays.

### (5. Supplementary Remarks)

Hereinbefore, specific descriptions of the embodiments of the present invention have been given. These embodiments are merely illustrative. The scope of the present invention is not restricted to the illustrative embodiments. The present invention should be construed as widely as those skilled in the art can appreciate.

Although the above embodiments provide ten output trays in the output tray group 200, the number of output trays may be optional.

Although the above embodiments illustrate the example case of setting three degrees of priority, the number of degrees of priority is not limited to three. Two degrees of priority, or four or more degrees of priority may be set. Furthermore, setting the degree of priority is not indispensable.

Although the above embodiments illustrate the case where data is divided into jobs each corresponding to 100 pages, the number of pages corresponding to one job may be optional. It may be acceptable that the number of pages of recording media to be ejected is different among output trays. In such a case, not one value but two or more values may be set as the number of pages corresponding to one job.

It may not be essential that the output tray controller 100 determines the number of output trays based on the number of output trays that have not been assigned to another image data at a timing of this determination of output trays. Another way of determination may be adopted. For example, it may be conceivable that the number of output trays to be determined is predefined for each set degree of priority.

Alternatively, the number of output trays to which recording media having images formed thereon are to be ejected may be determined in a more dynamical fashion. In this case, output trays to which image data awaiting image formation (awaiting printing) is to be ejected may be successively determined at a predetermined timing as well as at a timing when the image data is inputted from the information processor 30 to the image forming apparatus 10.

The number of the special output trays 220 provided may be two or more.

It may not be essential that the notifying unit 120 constantly notifies the user at regular intervals (for example, every five minutes). The interval of giving the notification may be changed depending on the situation.

Alternatively, a configuration is acceptable in which, if recording media having images formed thereon are left uncollected in any of the first to tenth output trays 201 to 210, the notifying unit 120 notifies the specified user every certain time period irrespective of the special output tray 220. This can avoid leaving recording media uncollected in the output trays.

The notification given by the notifying unit 120 may be implemented by either e-mail or voice communication.

The present invention may be suitable applied as an image forming apparatus including a plurality of output trays.

## Claims

1. An image forming apparatus comprising:
an image forming unit (110) that forms images on media based on image data;
output trays (200) that hold the media; and
a controller (100) that, based on the image data, decides the output trays as output trays to which the media are to be ejected.

2. The image forming apparatus according to claim 1, wherein
the controller (100) divides the image data into of jobs, and assigns to each of the jobs an output tray to which the media are to be ejected.

3. The image forming apparatus according to claim 1 or 2, wherein
when it is impossible to eject the media to the output trays, the image forming unit abandons image formation based on the image data.

4. The image forming apparatus according to claim 3, wherein
upon abandoning image formation based on the image data, the image forming unit starts formation of images on the media based on another image data.

5. The image forming apparatus according to any one of claims 1 to 4, wherein
each of the image data has a degree of priority set therefor, and
the controller (100) determines the number of output trays to which the media are to be ejected based on the degree of priority.

6. The image forming apparatus according to claim 5, wherein
the image forming unit (110) changes an image-forming order based on the degree of priority.

7. The image forming apparatus according to any one of claims 1 to 6, wherein
the output trays (200) include a special output tray (220) that allows only a specified user to take out the media therefrom.

8. The image forming apparatus according to claim 7, wherein
the special output tray (220) allows a user who has inputted the image data to take out the media therefrom.

9. The image forming apparatus according to claim 7, wherein
the special output tray (220) allows a user who has inputted the image data and a preset administrator user to take out the media therefrom.

10. The image forming apparatus according to any one of claims 7 to 9, wherein
based on an authentication performed by the specified user, the special output tray (220) allows the media to be taken out therefrom.

11. The image forming apparatus according to any one of claims 7 to 10, further comprising a notifying unit (120) that notifies the specified user upon elapse of a predetermined time period after the media are ejected to the special output tray (220).

12. The image forming apparatus according to claim 11, wherein
the notifying unit notifies the specified user at a frequency that is determined based on the number of the special output trays to which the media are ejected.

13. The image forming apparatus according to any one of claims 1 to 12, wherein
the controller dynamically changes the number of output trays to which the media are to be ejected.

14. A method for forming an image, comprising:
a first step (S430) of determining the number of output trays to which media are to be ejected based on image data;
a second step (S450) of forming images on the media based on the image data; and
a third step (S450) of discharging the media to the output trays determined in the first step.
